# EUROPEAN PATENT APPLICATION

(11) **EP 1 640 283 A1**
(43) Date of publication of application: **29.03.2006**
(21) Application number: 04746505.9
(22) Date of filing: 25.06.2004
(51) Int. Cl.: B65D 41/34, B65D 51/16, B65D 1/02, B21D 51/38, B21D 51/50, B29C 57/02

(54) **UNSEALING STRUCTURE FOR CONTAINER, CONTAINER WITH THE STRUCTURE, AND METHOD OF PRODUCING THE STRUCTURE**

(30) Priority: 27.06.2003 JP 2003185978; 29.09.2003 JP 2003338409; 05.04.2004 JP 2004111620
(71) Applicant: TOYO SEIKAN KAISHA, LTD., Tokyo 100-8522 (JP)
(72) Inventor: KOBAYASHI, T., TOYO SEIKAN GROUP Corporate R & D, Yokohama-shi, Kanagawa 240006 (JP); TAKAO, Kenichi, TOYO SEIKAN GROUP Corporate R & D, Yokohama-shi, Kanagawa 2400062 (JP); NAGATA, Kouji, TOYO SEIKAN GROUP Corporate R & D, Yokohama-shi, Kanagawa 2400062 (JP)
(74) Representative: Vossius & Partner
(86) International application number: PCT/JP2004/009036
(87) International publication number: WO 2005/000698

(57) **Abstract**

The present invention provides an opening structure of a container which can easily perform the opening and the resealing and a container provided with such an opening structure. The opening structure of the present invention is characterized in that in the container which continuously and integrally forms a cap portion and a pouring portion, due to a radial deformation of an easy-to-break portion which is present in a boundary between the cap portion and the pouring portion, the easy-to-break portion is broken and hence, the cap portion and the pouring portion are separated thus opening the container. Further, in a manufacturing method of an opening structure of a container of the present invention, an enlarged-diameter portion is formed by enlarging a diameter of a cylindrical portion from the inside to the outside thereof, an easy-to-break portion is formed on the enlarged-diameter portion, the cylindrical portion is pressurized in the height direction such that an intermediate wall expecting portion which is formed on a center portion of the cylindrical portion in the height direction is formed into an intermediate wall, an outer wall expecting portion is folded back from above such that the outer wall expecting portion is arranged on an outermost side and forms an outer wall thus forming a projecting portion which is formed of cylindrical triplicate walls consisting of an inner wall, an intermediate wall and the outer wall, a deflection deformation portion is formed between the outer wall and the intermediate wall and between the intermediate wall and the inner wall, and engaging portions are formed on the projecting portion.

## Description

### Technical Field

The present invention relates to an opening structure of a container, a container provided with the opening structure and a method of manufacturing the opening structure, and more particularly to an opening structure of a container such as a juice can, a beer can, a carbonated drink can, a coffer drink can, a tea drink can, an edible oil can, a seasoning can or the like, which exhibits the excellent opening property and enables easy opening and closing thereof, a container provided with such an opening structure, and a method of manufacturing the opening structure.

### Background Art

Conventionally, as the above-mentioned hermetically sealed container such as the juice can, the beer can, the carbonated drink can, the coffer drink can, the tea drink can, the edible oil can, the seasoning can or the like, a container which seams an easily openable lid to an opening end portion of a container body has been popularly used. An easy-to-break portion (scores) which partitions a lid body and the opening portion is formed in the easily openable lid, wherein by breaking and pushing the easy-to-break portion downward using a pinching tab which is fixedly mounted on a lid body by riveting, a pouring portion which constitutes an outlet for drinking is formed.
With respect to such a conventional hermetically sealed container, however, when some beverage remains in the container after drinking, it is unable to reseal the opening portion and hence, there has been a drawback that it requires time and efforts to throw away the remaining beverage or to move the beverage in the container to a cup or the like and to preserve the beverage in a refrigerator. Alternatively, there has been a drawback that a foreign substance adheres to the easy-to-open lid thus easily giving rise to an unhygienic situation.

Accordingly, there has been made the development of the hermetic container which allows the resealing of the pouring portion. For example, in patent document 1, there is disclosed can container having a resealing cap in which a fragile portion is broken in a metal-made can container and a portion surrounded by the fragile portion is pushed to the inside of a can body thus opening a pouring opening and, at the same time, a resin-made cap for resealing the opened pour opening is detachably mounted on the opening portion of a container can lid.

In the container described in patent document 1, the pouring opening is opened such that the cap is mounted and removed by the engagement between the opening portion of the can lid and the first cylindrical portion of the cap. At the same time, the pushbutton portion and the plug portion are displaced downwardly by causing the elastic deformation of the movable connecting portion by pushing the pushbutton portion of the cap with a finger from above. As a result, with respect to a metal-made container which has a substantially annular breakable fragile portion(scores)except for one portion which constitutes a hinge portion, the fragile portion is broken and a portion surrounded by the fragile portion is pushed downwardly into the inside of the can body and hence, a pouring mouth is opened. Further, in resealing the pouring portion which is opened, the movable connecting portion is made to get over a dead point and to turn downwardly due to the elastic deformation so that the flange portion of the cap is brought into close contact with an upper end surface of the opening portion of the can lid thus enabling sealing of the pouring portion.

However, with respect to the container described inpatent document 1, the resin-made cap is constituted separately from the container body and hence, there arises a drawback that steps for manufacturing the container become cumbersome thus worsening the productivity. Further, the metal-made can container and the resin-made cap are made of materials different from each other and hence, there arises a drawback that it is necessary to separate them in discarding the container thus giving rise to a drawback that the discarding operation is cumbersome and exhibits the poor recycling property.
Further, there exists a drawback that since the cap exhibits the poor durability during use thereof, also due to vibrations and impacts which the container receives during the transportation before use or the like, the cap may be removed from the container body.
Further, there exists a drawback that since the easy-to-break portion is opened by pushing the push button of the cap from above with the finger at the time of opening the pouring portion, it is difficult for an infant, an aged person or the like who lacks the strength and shows an unsteady hand motion to open the pouring portion and, at the same time, since a user cannot confirm an opened state until the user removes the cap, the container lacks the reliability of opening. Still further, there exists a drawback that, at the time of resealing, foreign substances such as dust or debris stay or are adhered to a joint portion between the cap portion and the pouring portion and hence, the container becomes unhygienic.

We have made a development to overcome the above-mentioned drawbacks and eventually have developed an opening structure of a container described in patent document 2 and have already filed a patent application thereon. The opening structure of the container described in patent document 2 is characterized in that a pouring portion and a cap portion are continuously integrally formed and, at the same time, an easy-to-break portion is formed.
In opening the opening structure of the container described in patent document 2, a user grasps an outer wall of the opening structure and rotates the opening structure so as to impart a shearing force to the opening structure. Due to such a shearing force, the easy-to-break portion is broken and a cap portion is independently rotated with respect to an intermediate wall thus opening and separating the cap portion. Further, when some beverage remains in the container after drinking at the time of resealing the container, the outer wall is fitted on the intermediate wall and is rotated so as to surely fix both of the outer wall and the intermediate wall by means of thread engaging portions respectively formed on the outer wall and the intermediate wall thus sealing the container.

According to the opening structure of the container described in patent document 2, although the opening structure exhibits the excellent productivity at the time of manufacturing containers and the excellent durability, a finger is required to generate a rotational force to some extent at the time of opening the container.

[Patent Document 1]
Japanese Laid-open 2000-296866
International Publication W003/057583

### Disclosure of the Invention

The present invention has been made to solve the above-mentioned drawbacks and it is an object of the present invention to provide an opening structure of a container which exhibits the excellent opening ability which allows easy opening and resealing, a container provided with the opening structure, and a manufacturing method of the opening structure.

Inventors of the present invention have made extensive studies to obtain the above-mentioned object and have arrived at the present invention based on a finding that the opening property can be enhanced by adopting the opening structure of a container which is openable due to a radial deformation of an easy-to-break portion.

With respect to an opening structure of a container described in claim 1, in the opening structure of the container which continuously and integrally forms a cap portion and a pouring portion, due to a radial deformation of an easy-to-break portion which is present in a boundary between the cap portion and the pouring portion, the easy-to-break portion is broken and hence, the cap portion and the pouring portion are separated thus opening the container.
The opening structure of a container described in claim 2 is, in the constitution described in claim 1, characterized in that a deflection deformation portion is provided in the vicinity of the easy-to-break portion, the deflection deformation portion is deformed by being pushed in the inside direction from the outside thus generating the radial deformation of the easy-to-break portion.
The opening structure of a container described in claim 3 is, in the constitution described in claim 1 or 2, characterized in that the cap portion and the pouring portion are continuously and integrally formed of an inner wall, an intermediate wall which is folded back downwardly from an upper end portion of the inner wall, and an outer wall which is folded back upwardly from a lower end portion of the intermediate wall, and the easy-to-break portion is formed on the outer wall.
The opening structure of a container described in claim 4 is, in the constitution described in claim 3, characterized in that the deflection deformation portion is provided in a gap defined between the outer wall and the intermediate wall and/or in a gap defined between the intermediate wall and the inner wall.
The opening structure of a container described in claim 5 is, in the constitution described in any one of claims 1 to 4, characterized in that the cap portion includes a cylindrical cover portion which is contiguously integrally formed with the easy-to-break portion and a disc-like ceiling plate portion which covers an opening portion of the pouring portion, and thread portions are formed on the cylindrical cover portion and the pouring portion which is contiguously formed with the cover portion.
The opening structure of a container described in claim 6 is, in the constitution described in claim 5, characterized in that along with the rotation of the cap portion in the cap opening direction from a cap-sealed state, a gap generated between the thread grooves of the pouring portion and the thread crests of the cap portion is formed in a gradually enlargedmanner.
The opening structure of a container described in claim 7 is, in the constitution described in claim 6, characterized in that a width of the thread grooves of the pouring portion and a width of the thread crests of the cap portion are gradually decreased downwardly.
The opening structure of a container described in claim 8 is, in the constitution described in claim 6, characterized in that a depth of the thread grooves of the pouring portion and a height of the thread crests of the cap portion are gradually decreased downwardly.
The opening structure of a container described in claim 9 is, in the constitution described in claim 6, characterized in that a width of the thread grooves of the pouring portion and a width of the thread crests of the cap portion are gradually decreased downwardly, and a depth of the thread grooves of the pouring portion and a height of the thread crests of the cap portion are gradually decreased downwardly.
The opening structure of a container described in claim 10 is, in the constitution described in any one of claims 1 to 4, characterized in that the cap portion includes a cylindrical cover portion which is contiguously integrally formed with the easy-to-breakportion and a disc-like ceilingplateportionwhich covers an opening portion of the pouring portion, and an undercut portion is formed in the cylindrical cover portion.
The opening structure of a container described in claim 11 is, in the constitution described in any one of claims 1 to 10, characterized in that a sealing material is arranged between an upper portion of an inner surface of the cap portion and the pouring portion.
The opening structure of a container described in claim 12 is, in the constitution described in any one of claims 1 to 11, characterized in that sub scores are formed adjacent to the easy-to-break portion.
The opening structure of a container described in claim 13 is, in the constitution described in any one of claims 1 to 12, characterized in that the deflection rigidity of the deflection deformation portion is set non-uniform in the circumferential direction.
The opening structure of a container described in claim 14 is, in the constitution described in claim 13, characterized in that the deflection deformation portion is embossed.
The opening structure of a container described in claim 15 is, in the constitution described in any one of claims 1 to 14, characterized in that an unopened guarantee material is provided to or in the vicinity of the deflection deformation portion or to or in the vicinity of the easy-to-break portion.
A container described in claim 16 is characterized by including the opening structure of a container described in any one of claims 1 to 15.
With respect to a manufacturing method of an opening structure of a container described in claim 17, in the manufacturing method of an opening structure of a container, an enlarged-diameter portion is formed by enlarging a diameter of a cylindrical portion from the inside to the outside thereof, an easy-to-break portion is formed on the enlarged-diameter portion, the cylindrical portion is pressurized in the height direction such that an intermediate wall expecting portion which is formed on a center portion of the cylindrical portion in the height direction is formed into an intermediate wall, an outer wall expecting portion is folded back from above such that the outer wall expecting portion is arranged on an outermost side and forms an outer wall thus forming a projecting portion which is formed of cylindrical triplicate walls consisting of an inner wall, an intermediate wall and the outer wall, a deflection deformation portion is formed between the outer wall and the intermediate wall and/or between the intermediate wall and the inner wall, and engaging portions are formed on the projecting portion.
The manufacturing method of an opening structure of a container according to claim 18 is, in the constitution described in claim 17, in forming the enlarged-diameter portion by enlarging the cylindrical portion from the inside to the outside, a bulged annular portion is formed in the vicinity of a boundary between the outer wall expecting portion and the intermediate wall expecting portion, and a connecting portion having a diameter larger than a diameter of the intermediate wall expecting portion is provided below the bulged annular portion.
The manufacturing method of an opening structure of a container according to claim 19 is, in the constitution described in claim 17 or claim 18, characterized in that sub scores are formed adjacent to the easy-to-break portion.

According to the opening structure of a container of the present invention, the opening structure can be easily manufactured. Further, the opening structure can achieve the excellent recycle property, the excellent prevention of removal of the opening structure during the transportation, the excellent prevention of an unauthorized opening and the excellent opening property and can easily perform the opening and the resealing.
Further, according to the manufacturing method of the opening structure of the container of the present invention, it is possible to easily manufacture the above-mentioned opening structure of the above-mentioned container.

### Brief Description of the Drawings

Fig. 1 is a cross-sectional view of an essential part showing an opening structure of a container of an embodiment 1 of the present invention;
Fig. 2 is an explanatory view showing a state in which a cap portion of the embodiment 1 is removed;
Fig. 3 is an explanatory view showing a manner of using the opening structure of the container of the present invention;
Fig. 4 is a cross-sectional view of an essential part showing an opening structure of a container of an embodiment 2;
Fig. 5 is a cross-sectional view of an essential part showing an opening structure of a container of an embodiment 3;
Fig. 6 is a cross-sectional view of an essential part showing an opening structure of a container of an embodiment 4;
Fig. 7 is a partial cross-sectional view of a mode 1 of the opening structure which forms a gas leaking passage therein;
Fig. 8 is a partial cross-sectional view of a cap-opened state after opening a cap in the mode 1 of the opening structure which forms the gas leaking passage therein;
Fig. 9 is a partial cross-sectional view of a mode 2 of the opening structure which forms a gas leaking passage therein;
Fig. 10 is a partial cross-sectional view of a cap-opened state after opening a cap in the mode 2 of the opening structure which forms the gas leaking passage therein;
Fig. 11 is a partial cross-sectional view of a mode 3 of the opening structure which forms a gas leaking passage therein;
Fig. 12 is a partial cross-sectional view of a cap-opened state after opening a cap in the mode 3 of the opening structure which forms the gas leaking passage therein;
Fig. 13 is a cross-sectional view of an essential part showing an opening structure of a container of an embodiment 5;
Fig. 14 is a cross-sectional view of an essential part in a state that a cap portion of the opening structure of the container of the embodiment 5 is separated;
Fig. 15 is a schematic explanatory view showing an example of a sub score portion in the opening structure of the container of the present invention;
Fig. 16 is a schematic explanatory view showing an example of an embossed convex portion in the opening structure of the container of the present invention;
Fig. 17 is a schematic explanatory view showing another example of the embossed convex portion in the opening structure of the container of the present invention;
Fig. 18 is a schematic cross-sectional view showing an example of a container which is provided with an opening structure of the container of the present invention;
Fig. 19 is a schematic cross-sectional view showing another example of the container which is provided with an opening structure of the container of the present invention;
Fig. 20 is a schematic explanatory view showing an example of a manufacturing method of the opening structure of the container of the present invention;
Fig. 21 is a schematic explanatory view showing an example of a manufacturing method of the opening structure of the container of the present invention;
Fig. 22 is a schematic explanatory view showing an example of a manufacturing method of the opening structure of the container of the present invention;
Fig. 23 is a schematic explanatory view of bulge forming in a third step;
Fig. 24 is a schematic explanatory view of the formation of a bulged annular portion;
Fig. 25 is a schematic explanatory view of the formation of a bulged annular portion;
Fig. 26 is a schematic explanatory view of a manufacturing device;
Fig. 27 is a cross-sectional view of a score forming means in the manufacturing device shown in Fig. 26; and
Fig. 28 is a schematic explanatory view of a manufacturing device of another embodiment.

### [Explanation of symbols]

10, 20, 30, 40, 50, 60, 70, 80: opening structure of container of embodiment
11, 21, 31, 41, 51, 63: easy-to-break portion
12, 22, 32, 42, 52: inner wall
13, 23, 33, 43, 53: intermediate wall
14, 24, 34, 44, 54: outer wall
11a : breaking end
11b: sub score
12a: upper end portion
13a: lower end portion
14a: lower close-contact portion
14b: embossed portion
15, 25, 35: deflection deformation portion
15a: pushing portion
16a: cover portion
16b: ceiling plate portion
17, 47: thread engaging portion
18: sealing material
19: opening portion
24b, 34b: lower portion
51a: undercut portion
56: recessed portion
90: score forming means
91: main score forming blade
92: sub score forming blade
93, 96: holding and moving means
94, 97: restricting means
95, 98: drive means
99a, 99b: holding means
100: container
101: curling portion
102: drum portion of container
103: sealing material
110: container
112: drum portion of container
113: bottom lid
170: can drum
171: seam portion
A, 62, 72, 82: cap portion
B, 61, 71, 81: pouring portion
C: cylindrical portion
C1: outer wall expecting portion
C2: intermediate wall expecting portion
C3: inner wall expecting portion
D1: outer thread forming roll
D2: inner thread forming roll
E: mandrel
E1: blade-like roll
E2: rotary mandrel
F: enlarged-diameter portion
F1: bulged annular portion
F2: connecting portion
F3: cylindrical wall portion
F4: stepped portion
H1, H2, H3: depth of thread grooves, height of thread crests
P: metal plate
Q: cylindrical cup
R: pressurizing tool
S: gap
U: resilient body
V: split mold
W1, W2, W3: width of thread grooves, width of thread crests
Arrow X: inner direction
Arrow Y: outer direction
Arrow Z: vertical direction

### Best Mode for carrying out the Invention

Hereinafter, container opening structures, a container and a manufacturing method of the opening structure according to embodiments of the present invention are explained in detail in conjunction with drawings.

### (Embodiment 1)

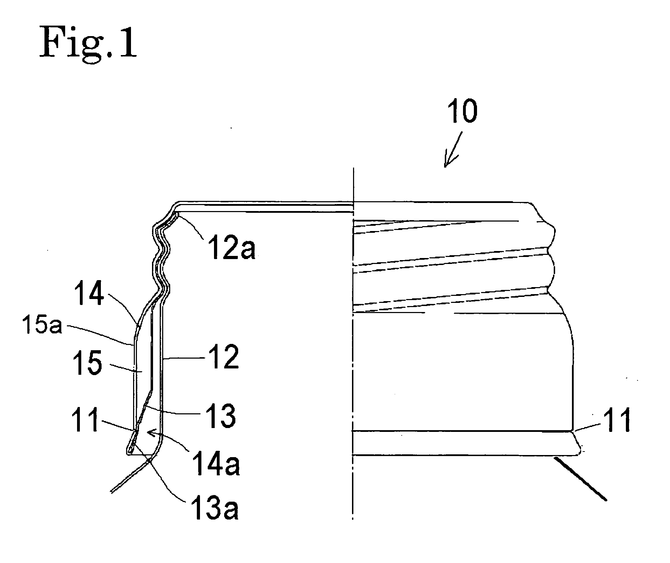

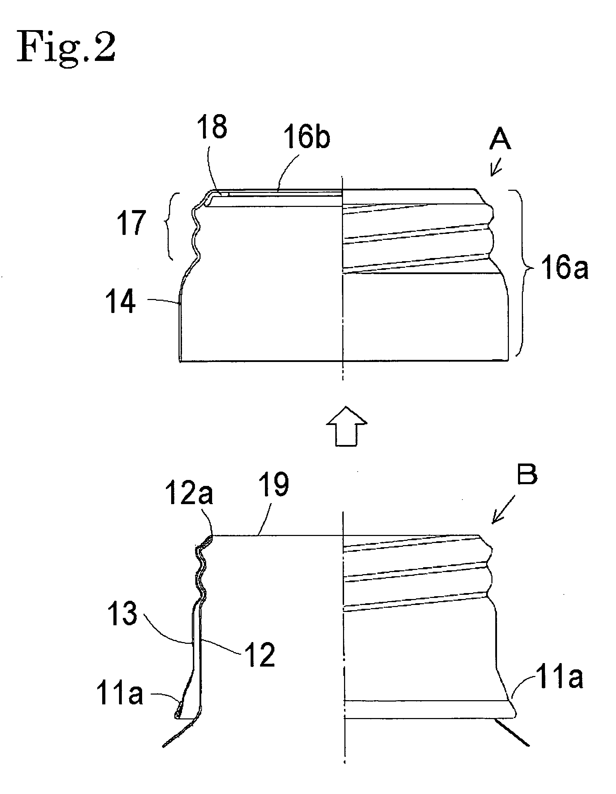

Fig. 1 is a cross-sectional view of an essential part of the opening structure of the container of an embodiment 1 of the present invention. Fig. 2 is an explanatory view showing a state in which a cap portion of the opening structure of the container is removed. As shown in Fig. 1 and Fig. 2, the opening structure 10 of the container of the embodiment 1 of the present invention is characterized in that, in the opening structure of the container in which a cap portion A and a pouring portion B are continuously and integrally formed, due to a radial deformation of an easy-to-break portion 11 which is present in a boundary between the cap portion A and the pouring portion B, the easy-to-break portion 11 is broken so as to separate the cap portion A and the pouring portion B whereby the container is opened.
In the opening structure 10 of the container of the embodiment 1 of the present invention, the cap portion A and the pouring portion B are continuously and integrally formed by way of an inner wall 12, an intermediate wall 13 and an outer wall 14. That is, the intermediate wall 13 is formed by being folded back downwardly from an upper end portion 12A of the inner wall 12, the outer wall 14 is formed by being folded back upwardly from a lower end portion 13A of the intermediate wall 13, and the cap portion A and the pouring portion B include a triplicate cylindrical structure which is integrally formed of these triplicate walls.
Further, in the opening structure of the container of the embodiment 1 of the present invention, by way of the easy-to-break portion 11 which is formed on a lower end close-contact portion 14a between the outer wall 14 and the intermediate wall 13, the outer wall 14 is arranged separably from the intermediate wall 13 , and a deflection deforming portion 15 is formed between an outer wall 14 and the intermediate wall 13. Due to such a structure, the outside of the pouring portion B is positioned inside the container before the container is opened and hence, there is no possibility that the outside of the pouring portion is contaminated whereby even when a user drinks beverage by bringing his/her mouth to the pouring portion B (so-called straight drinking from bottle), he/she does not have a sense of uncleanliness.

Here, the easy-to-break portion 11 constitutes a portion which is broken at the time of opening the container and at which the opening structure is separated into a cap portion A and a pouring portion B. In this embodiment 1, the easy-to-break portion 11 is formed on a lower-end close-contact portion 14a between the outer wall 14 and the intermediate wall 13. By breaking the easy-to-break portion 11 and separating the cap portion A, it is possible to pour out content from the container and, at the same time, it is possible to make use of the separated cap portion A for resealing again.
Further, since the easy-to-break portion 11 is formed on the lower-end close-contact portion 14a, a broken end 11a which appears when the cap portion A and the pouring portion B are separated is in a state that the broken end 11a is brought into close contact with the intermediate wall 13, whereby it is possible to ensure the safety such that even when a user's finger, lip, tongue or the like is brought into contact with the broken end 11a, there is no possibility that his/her finger, lip, tongue or the like is cut.

The easy-to-break portion 11 may, provided that the easy-to-break portion 11 is easily broken at the time of opening the opening structure, not be particularly formed, and may be formed of a thin-wall groove shape (score) or either one of a hole-like or notched partial through hole (slit). By forming the easy-to-break portion 11 with the score, it is possible to surely and easily form the easy-to-break portion 11. Further, by forming the easy-to-break portion 11 with the slit, it is possible to obtain an advantageous effect that the opening property can be enhanced.

When the easy-to-break portion 11 is formed of the score, the easy-to-break portion 11 is formed by partially plastically deforming a portion of a thick wall portion in an annular shape or in an inner stitched pattern using a blade-like roll to have a thin wall thickness or by decreasing a wall thickness by cutting. Further, when the easy-to-break portion 11 is formed of the slit, a portion of a wall thickness is partially cut in a stitched pattern using a blade-like roll thus forming penetrating portions.

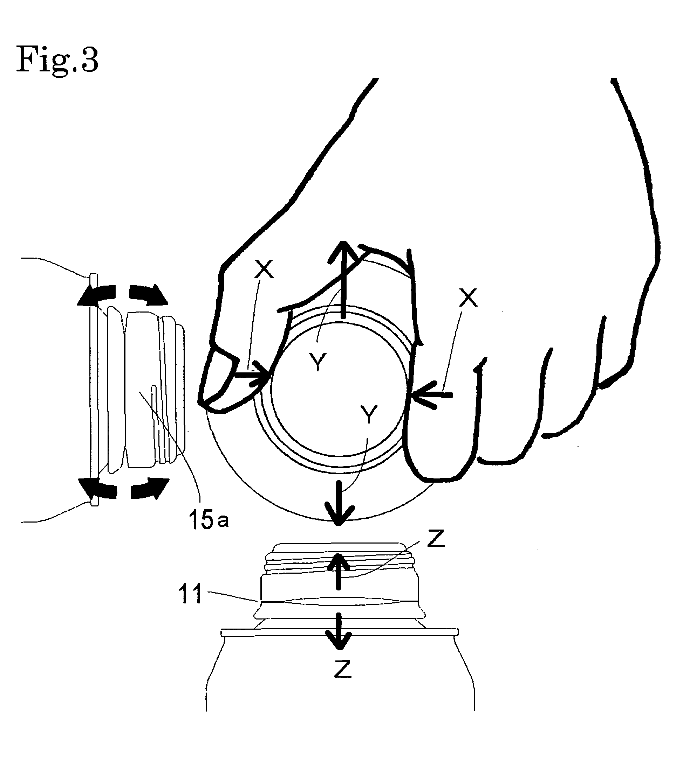

Here, the easy-to-break portion 11 being openable by the radial deformation implies that, as shown in Fig. 3, by pushing a side surface of thecapinwardlywitha finger, the easy-to-break portion 11 is broken thus facilitating the opening of the container. That is, by pushing a pushing portion 15a on a side surface (outerwa1114) of the cap portion A in the inward direction (arrow X) , the outer wall 14 is deflected in an elliptical shape. Here, by deforming the easy to brake portion 11 in the radial direction (the easy-to-break portion 11 being deformed in the direction of the arrow X at the portion which is pushed with the finger and being deformed in the direction of an arrow Y in the direction perpendicular to the portion which is pushed with the finger), a crack is generated in the easy-to-break portion 11 in the vicinity of the pushing portion 15a or a crack is generated in the vertical direction (arrow Z) in the easy-to-break portion 11 which is deformed in the outer direction (arrow Y) thus facilitating the separation of the cap portion A and the pouring portion B.

The generation of the cracks in the easy-to-break portion 11 can be, in the opening structure of the container of the embodiment 1, performed more reliably due to the presence of a deflection deformation portion 15 described below.
In the cap portion A, by providing the deflection deformation portion 15 which constitutes a gap (space) in the vicinity of the easy-to-break portion 11, that is, to a boundary between the outer wall 14 and the intermediate wall 13, by pushing the deflection deformation portion 15a of a side surface (outer wall 14) of the above-mentioned cap portion A in the direction indicated by the arrow X from the outside, the deflection deformation portion 15 is deflected thus enhancing the deformation of the easy-to-break portion 11 which is provided in the vicinity of the deflection deformation portion 115 whereby the easy-to-break portion 11 is broken more easily.

In this manner, since the cap portion A and the pouring portion B are continuously and integrally formed and hence, the sealing property of the cap portion after filling a content is completely guaranteed and, at the same time, it is possible to provide the opening structure of a container which exhibits the excellent productivity at the time of manufacturing containers and the excellent durability during the transportation or the like. Still further, since the container body and the cap portion are constituted of a single material and hence, it is unnecessary to separate the container body and the cap portion at the time of discarding them thus also exhibiting the excellent recycling property and the disposal easiness.
Further, an upper end portion 12a of the pouring portion B which is exposed by opening the container has a curvature of holding back of the inner wall and the intermediate wall and hence, the content is smoothly poured out from the pouring opening and, at the same time, even when a user drinks with his/her mouth in direct contact with the pouring portion (so-called straight drinking), there is no possibility that his/her mouth is injured thus allowing the opening structure to possess the excellent safety.
Further, the easy-to-break portion 11 is formed on the outer wall 14 and hence, the easy-to-break portion 11 can be confirmed with naked eyes from the outside of the container even before the container is opened, whereby even when an infant or an aged person can surely open the container while observing the broken state and, at the same time, the container opening structure exhibits the excellent tamper evident property. Still further, at the time of resealing, the cap portion can be easily mounted on the pouring portion thus maintaining the opening portion hygienically.

Further, in the opening structure 10 of a container of the embodiment 1 of the present invention, the cap portion A includes a cylindrical cover portion 16a which is contiguously and integrally extended from the easy-to-break portion 11 and a disc-like ceiling plate portion 16b which covers an opening portion 19 of the pouring portion B, wherein thread engaging portions 17 are formed on the cylindrical cover portion 16a and the pouring portion B which is connected with the cover portion 16a. To be more specific, fittable thread grooves are respectively formed in the outer wall 14, the inner wall 12 and the intermediate wall 13. In the thread engaging portion 17, a shape of the thread is not particularly limited and hence, the direction of thread crests may be projected either outwardly or inwardly. Further, the number of leads of threads may be either one lead or a plurality of leads.
By forming the thread engaging portions 17, the inner wall 12, the intermediate wall 13 and the outer wall 14 are engaged with each other by thread engagement and hence, even after the opening of the container, it is possible to detachably mount the opening structure whereby even when some beverage remains in the container after drinking, it is possible to hold the remaining beverage hygienically thus ensuring the resealing function. Further, it is sufficient to only simply thread the cap portion A into the pouring portion B at the time of resealing and hence, the opening structure requires no particular tool thus exhibiting the excellent handling property.

Further, in the opening structure 10 of a container of the embodiment 1 of the present invention, it is desirable that a sealing material 18 is arranged between an upper portion 16b of the inner surface of the cap portion A and the pouring portion. The sealing material 18 is preferable from a view point that the sealing material 18 can enhance the sealing property at the time of resealing. That is, the sealing material 18 can enhance the sealing property of the cap portion A at the time of resealing the pouring portion B, and even when the container body is tilted or becomes upside down or is being transported, there is no possibility that some beverage remaining in the container after drinking leaks out thus maintaining the container hygienically.

As a material of the sealing material 18, it is preferable to use a thin-wall-thickness donut disc-like material formed of a resilient body or a plastic body made of rubber, synthetic resin or the like which is adhered to or fitted in the ceiling plate portion 16b for ensuring the hermetic property. Such a sealing material 18 may be arranged in a state that the sealing material 18 is fitted in or adhered to the ceiling plate portion 16b to cover the ceiling plate portion 16b arranged inside the cap portion A or the sealing material 18 may be preliminarily applied to or adhered to an inner peripheral surface of a lower end portion of a thin-wall-thickness center portion C3 of a cylindrical cup Q in a forming step described later. Due to such a constitution, in a later step, the sealing material 18 is positioned below the ceiling plate portion 16b and is interposed between the ceiling plate portion 16b and the opening portion 19 of the powering portion to perform a role of a seal.

Alternatively, it is also possible to use a resin coated metal material such as a coated aluminum plate, a laminate aluminum plate or the like having an inner surface side to which organic coating is preliminarily applied. Due to such a constitution, at the time of covering the pouring portion B with the cap portion A which is broken and separated from the easy-to-break portion 11, the opening portion 19 of the pouring portion B and the above-mentioned organic coating of the ceiling plate portion 16b are brought into close contact with each other thus effectively preventing the leaking out of a liquid in the inside of the container.

Sizes of the opening structure 10 of the embodiment 1 of the present invention are not particularly limited. However, in general, heights of the pouring portion B, the intermediate wall 13 and the capportionAwhich are contiguously and integrally formed are set to approximately 5 to 50mm, while a diameter of the cap portion A is set to 10 to 100mm.
Further, a material of the opening structure may be formed of a coated metal plate which forms an organic film on at least one surface of a metal material or a metal plate such as aluminum alloy or a steel or a plastic material made of polyolefin, polyester or the like. With the use of the metal material, preferably the metal material which exhibits the excellent formability, it is possible to easily perform the folding back forming to form a triplicate wall consisting of the inner wall, the intermediate wall and the outer wall thus obtaining the opening structure of the container which exhibits the excellent durability and the excellent leaking resistance. Further, when the plastic material is used as the material of the opening structure, it is possible to apply a molding method such as injection mold, the extrusion molding or the like whereby a manufacturing cost for manufacturing a large number of opening structure can be reduced.

### (Embodiment 2)

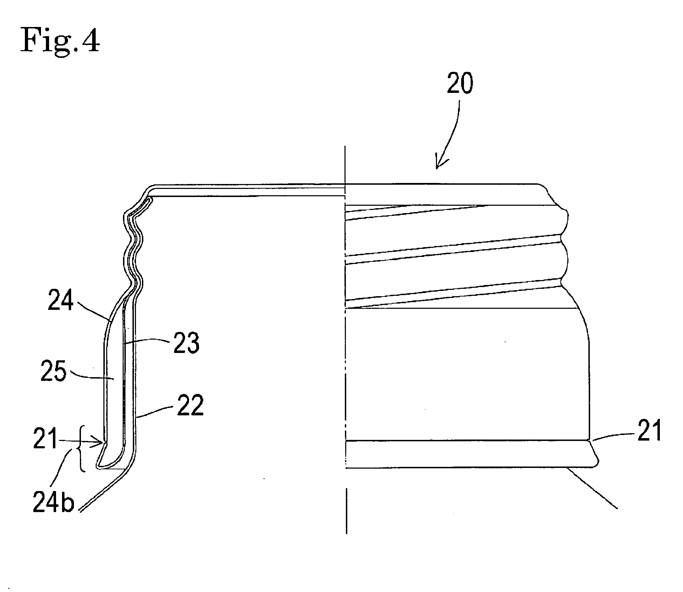

Fig. 4 is a cross-sectional view of an essential part of an opening structure of a container of an embodiment 2 of the present invention. In the opening structure 20 of a container of the embodiment 2, an easy-to-break portion 21 is formed on a lower portion 24b of an outer wall 24 and the lower-end close-contact portion 14a between the outer wall 14 and the intermediate wall 13 which is provided in the above-mentioned embodiment 1 is not formed. With respect to other constitutional points including a point that a deflection deformation portion 25 is provided in a gap defined between the outer wall 24 and an intermediate wall 23, this embodiment is substantially equal to the embodiment 1 of the present invention.

### (Embodiment 3)

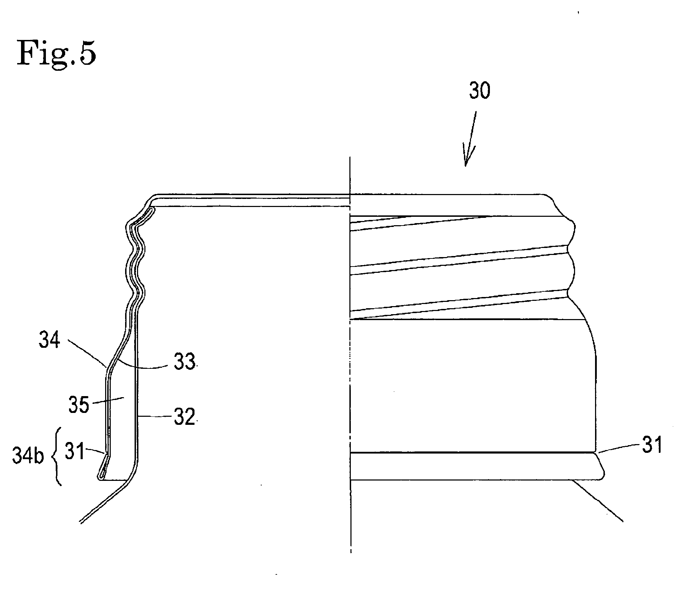

Fig. 5 is a cross-sectional view of an essential part of a container which includes an opening structure of a container of an embodiment 3 of the present invention. In the opening structure 30 of a container of the embodiment 3, an outer wall 34 and an intermediate wall 33 are continuously connected over whole portions ranging from upper ends to lower ends thereof, and an easy-to-break portion 31 is formed in a lower portion 34b of the outer wall 34. Further, a deflection deformation portion 35 is provided in a space defined between an inner wall 32 and the intermediate wall 33. With respect to other constitutional points, the embodiment 3 is substantially equal to the embodiment 1 of the present invention.

### (Embodiment 4)

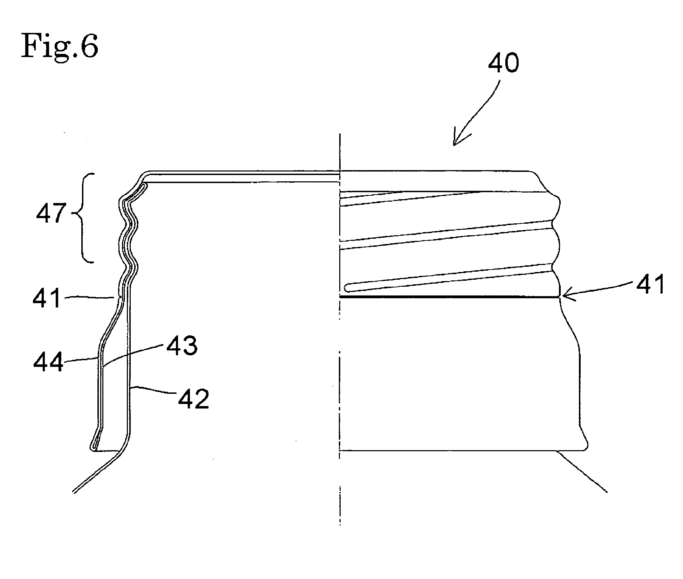

Further, Fig. 6 is a cross-sectional view of an essential part of a container which includes an opening structure of a container of an embodiment 4 of the present invention. In the opening structure 40 of a container of the embodiment 4, in the same manner as the above-mentioned embodiment 3, an outer wall 44 and an intermediate wall 43 are continuously connected over whole portions ranging from upper ends to lower ends thereof, and an easy-to-break portion 41 is formed on a lower portion of a thread engaging portion 47 formed on a cap portion A. With respect to other constitutional points, the embodiment 4 is substantially equal to the embodiment 1 of the present invention.

As described above, in case of embodiments 1 to 4 of the present invention shown in Fig. 1 to Fig. 6, a user grasps a side surface of the outer wall (cap portion A) of the opening structure and applies a pushing pressure to the inside. Accordingly, the cap portion A is deflected elliptically and hence, the radial deformation is generated in the easy-to-break portion whereby the easy-to-break portion is broken. Then, by independently rotating and separating the cap portion A with respect to the intermediate wall, the container can be opened whereby the user can pour beverage in the inside of the container into a cup through the pouring portion B or the user can directly drink the beverage from the container. When some beverage remains in the container, the pouring portion B is covered with the cap portion A and the cap portion A is rotated to be engaged with the pouring portion B by the thread engagement and hence, the cap portion A and the pouring portion B are surely fixed to each other thus completing the sealing.

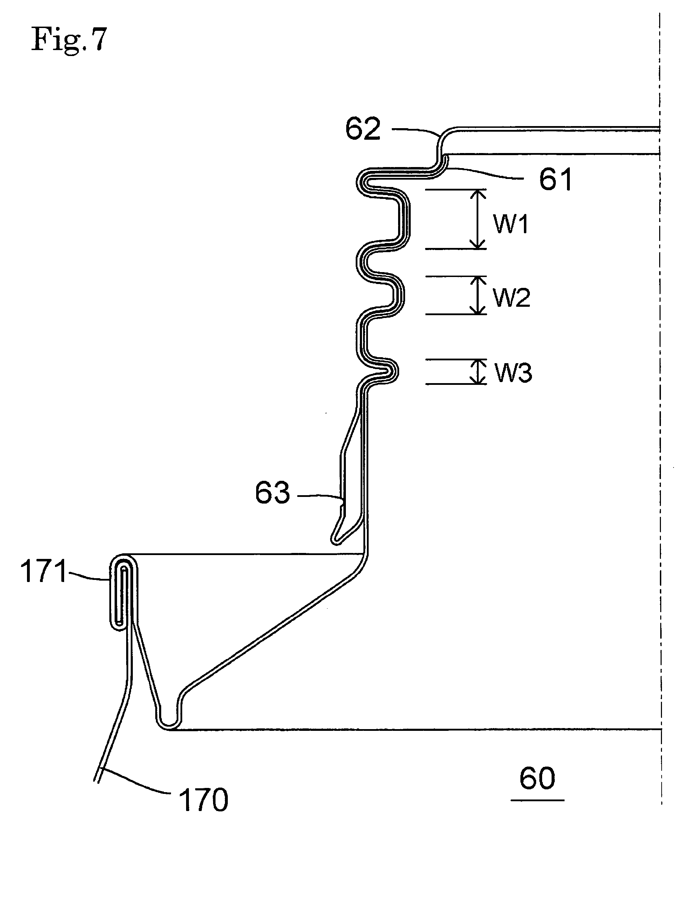

Fig. 7 to Fig. 12 are partial cross-sectional views of the opening structures for forming gas removing gaps for discharging gas in the inside of a container which becomes a cause of the blowout of content or the scattering of the cap when the container in which beverage such as beer, a carbonated drink or the like is filled and sealed is opened by gradually enlarging a gap formed between the thread grooves formed in the cap portion and the thread crests formed on the pour portion along with the rotation of the cap portion A in the cap opening direction from the cap closed state.

### (Mode 1 of the opening structure)

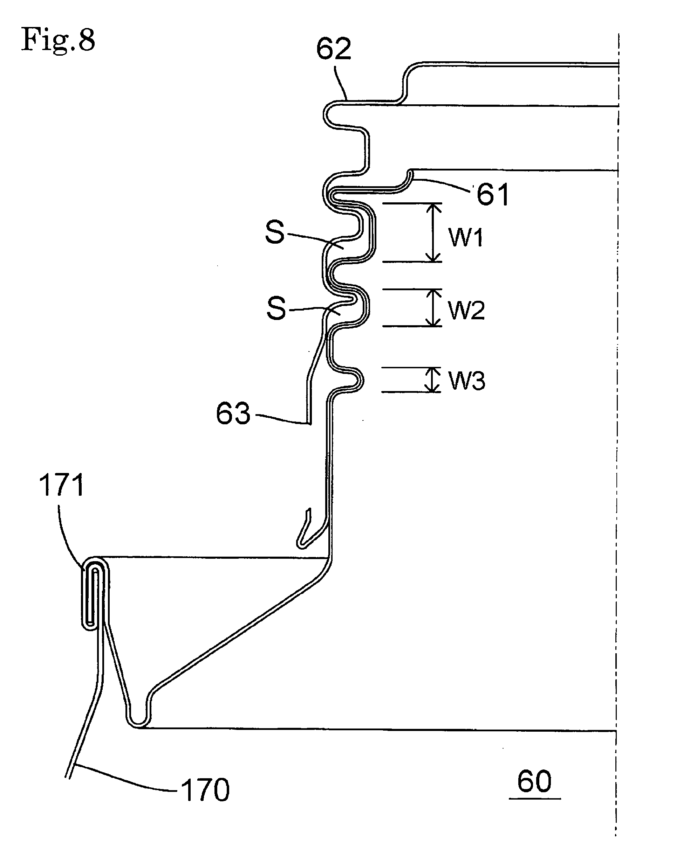

Fig. 7 and Fig. 8 are the partial cross-sectional views of the mode 1 of the opening structure which forms a gas removal passage therein, wherein Fig. 7 shows a sealed state before opening the container and Fig. 8 shows a state in which the cap is opened after opening the container. According to the mode 1, in the opening structure 60 of the container, a width of thread grooves of a pouring portion 61 and a width of thread crests of the cap portion 62 are gradually decreased downwardly (W1>W2>W3), wherein at the time of opening the container, by cutting an easy-to-break portion 63 which is arranged at a lower end of the cap portion 62 and, thereafter, by rotating the cap portion 62 in the cap opening direction, the gas removal gap S is formed between the above-mentioned thread grooves and thread crests.

### (Mode 2 of the opening structure)

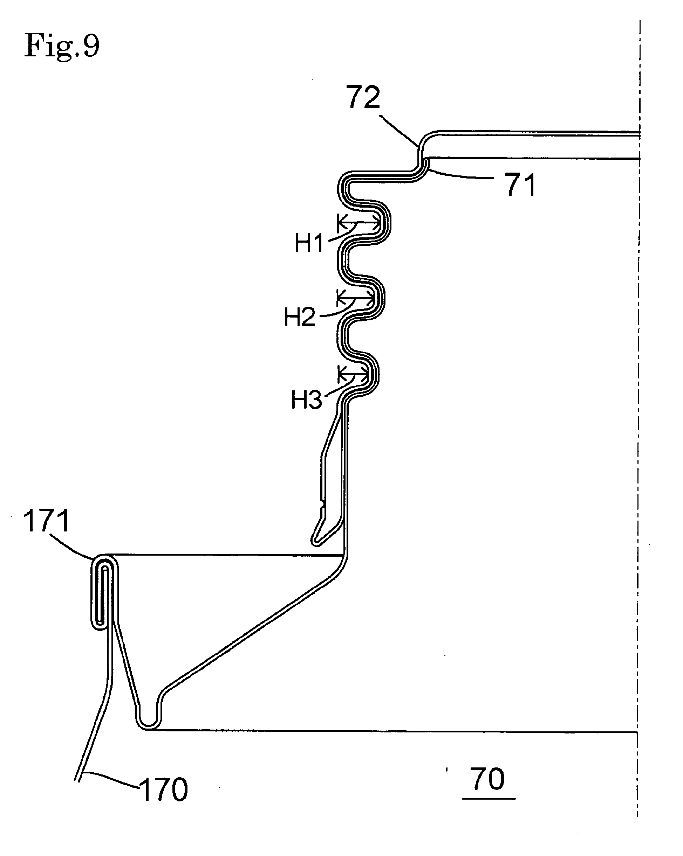

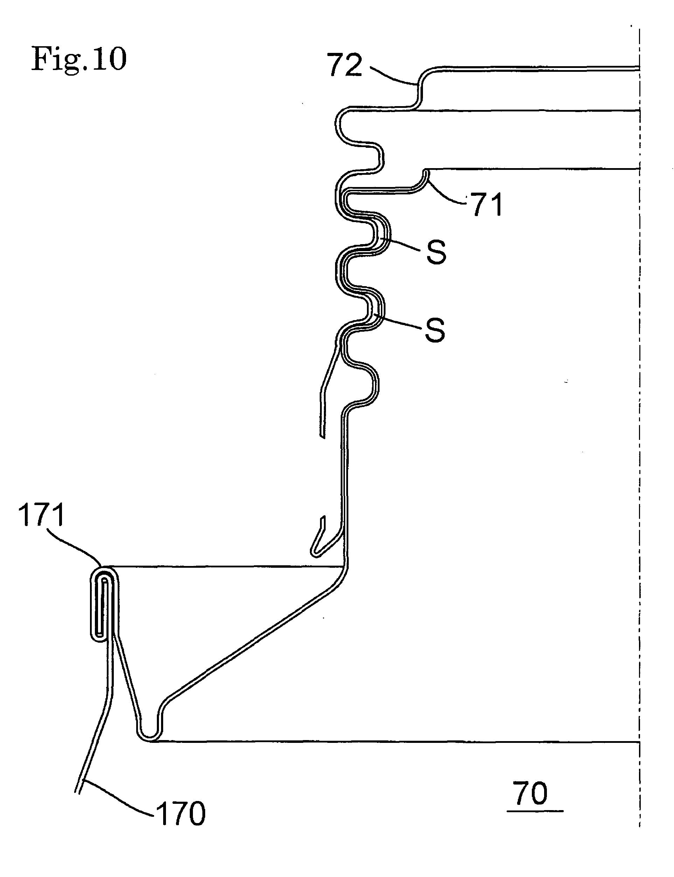

Fig. 9 and Fig. 10 are the partial cross-sectional views of the mode 2 of the opening structure which forms a gas removal passage therein, wherein Fig. 9 shows a sealed state before opening the container and Fig. 10 shows a state in which the cap is opened after opening the container. The opening structure 70 of the container of the mode 2 differs from the opening structure 70 of the above-mentionedmode 1 with respect to following points.
That is, a depth of thread grooves of a pouring portion 71 and a height of thread crests of the cap portion 72 are gradually decreased downwardly (H1>H2>H3), wherein by rotating the cap portion 72 in the cap opening direction, a container-body-inner-gas removal gap S is formed between the above-mentioned thread grooves and thread crests and hence, a gas removal can be easily performed at the time of opening the cap.

### (Mode 3 of the opening structure)

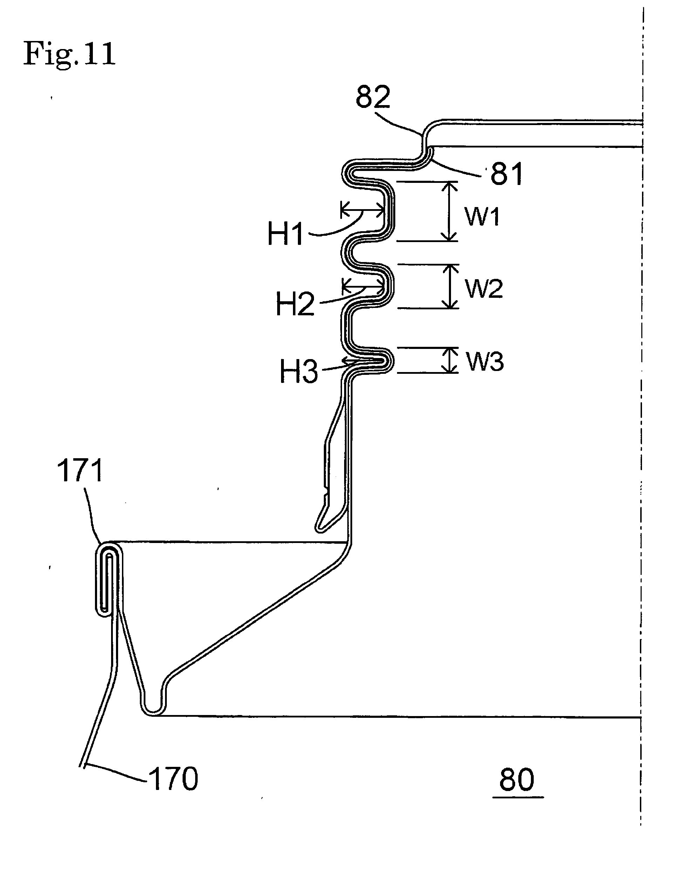

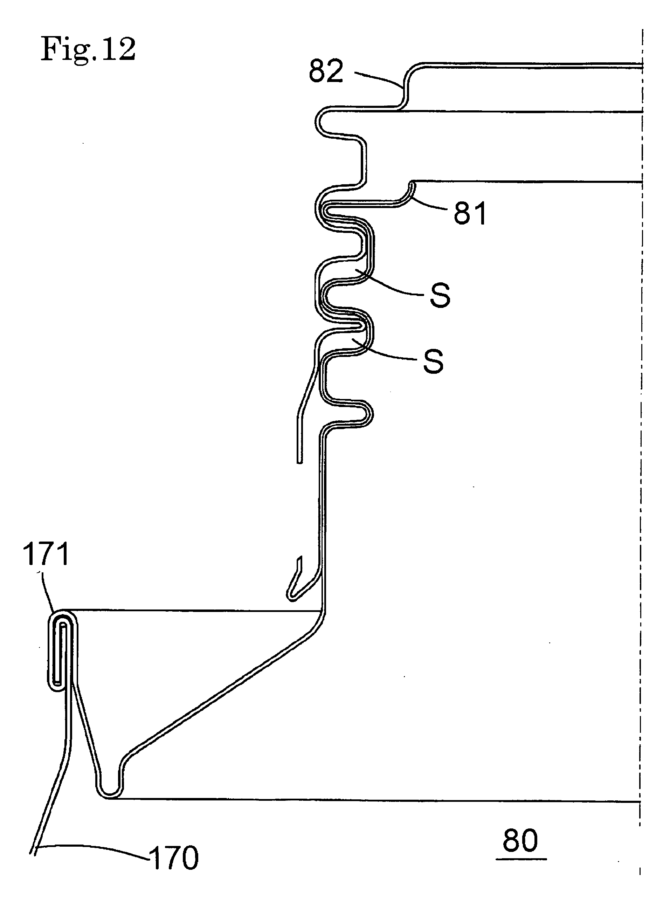

Fig. 11 and Fig. 12 are the partial cross-sectional views of the mode 3 of the opening structure which forms a gas removal passage therein, wherein Fig. 11 shows a sealed state before opening the container and Fig. 12 shows a state in which the cap is opened after opening the container. The opening structure 80 of the container of the mode 3 differs from the opening structures 60, 70 of the above-mentioned modes 1, 2 with respect to following points.
That is, a width of thread grooves formed in a pouring portion 81 and a width of thread crests in a cap portion 82, a depth of the thread grooves in the pouring portion 81 and a height of the thread crests in the cap portion 82 are gradually decreased downwardly (W1>W2>W3 and H1>H2>H3), wherein by rotating the cap portion 82 in the cap opening direction, container body inner gas removal space S is formed between the thread grooves and the thread crests whereby a gas removal can be easily performed at the time of opening the cap.
With respect to the opening structure of the container of this mode 3, by adopting the structure which combines the widths of the thread grooves and thread crests, and the depth of the thread grooves and the height of the thread crests, it is possible to ensure the gas removal gap S in a more effective manner.
Here, with respect to the opening structures shown in Fig. 7 to Fig. 12, the opening structure is bonded to a can drum 170 which is partially illustrated in the drawing by way of a double seamed portion 171.

### (Embodiment 5)

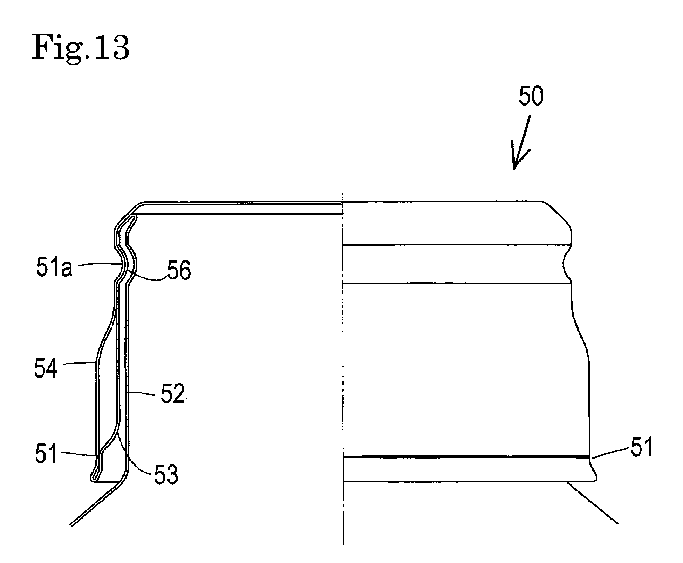

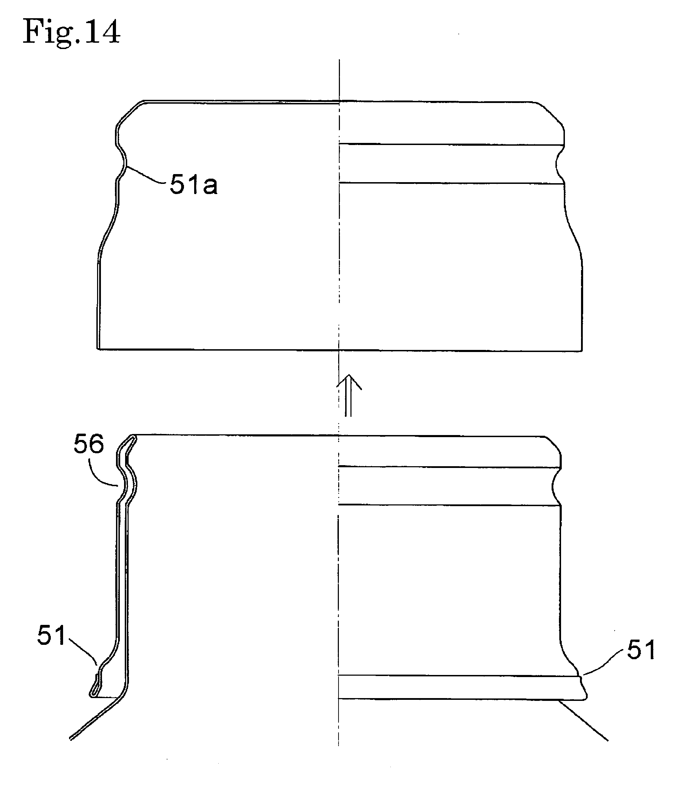

Fig. 13 and Fig. 14 are cross-sectional views of essential parts of the opening structure of a container of the embodiment 5 of the present invention. Although the opening structure 50 of a container of the embodiment 5 is basically equal to the opening structure 10 of the above-mentioned embodiment 1, the opening structure 50 differs from the opening structure 10 of the embodiment 1 with respect to a point that an undercut portion 51a is formed in a cap portion A and a pouring portion B which is connected to the cap portion A in place of the thread engaging portion 17.

The undercut portion 51a is a concave/convexportionwhich allows the cap portion A to be detachably engaged with the intermediate wall 53 of the pouring portion B after opening the container. In the embodiment 5, a concave indentation or a convex projection which can be fitted in or on the outer wall 54, the inner wall 52 and the intermediatewall 53 respectively is formed.
By simply pushing the cap portion A provided with the undercut portion 51a to the intermediate wall 52 with a one-touch manipulation, the cap can be easily mounted and dismounted thus allowing even an infant or an aged person to easily handle the opening structure of the container. Accordingly, the opening structure of the container of this embodiment is preferable.
Here, after breaking the easy-to-break portion 51, a diameter of the intermediate wall 53 is resiliently enlarged and hence, a recessed portion 56 formed in the intermediate wall 53 and the undercut portion 51a of the cap portion A are resiliently engaged with each other.
According to the opening structure of the embodiment 5, by pulling out the cap portion A upwardly and vertically after the easy-to-breakportion 51 is broken, it is possible to separate the cap portion A and the pouring portion B so as to open the container as shown in Fig. 14.

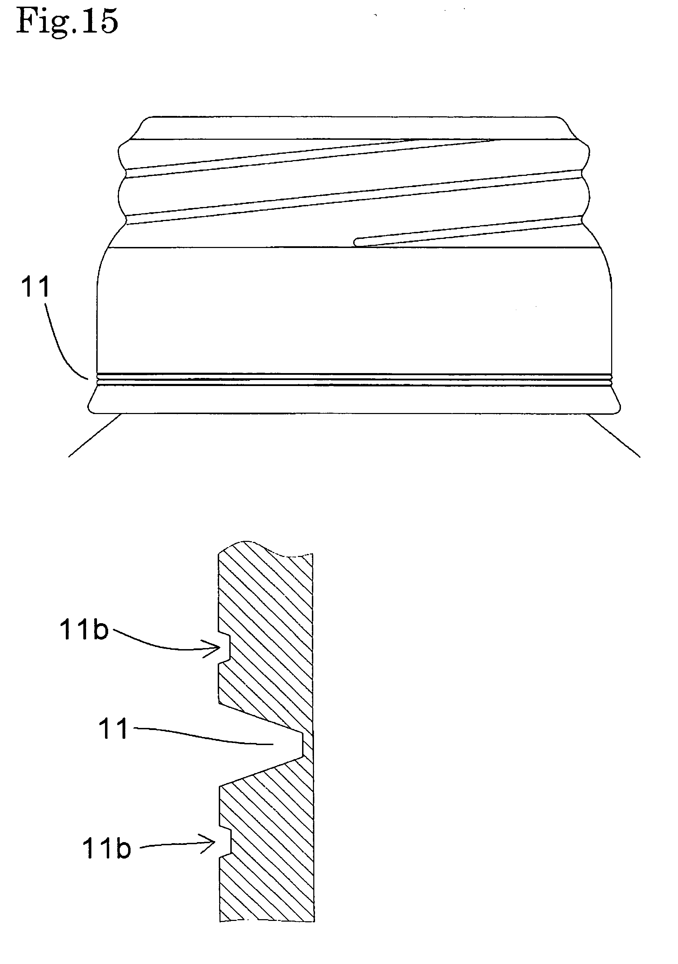

Here, according to the opening structure of the present invention, when the easy-to-break portion 11 is formed of the score as shown in Fig. 15, sub scores 11b which are shallower than the above-mentioned score may be formed adjacent to the above-mentioned easy-to-break portion 11. In this embodiment, when the sub scores are formed, the easy-to-break portion is referred to as a main score with respect to the sub scores. By forming sub scores 11b, an impact which is generated when the container falls on a floor inadvertently is absorbed by a portion of the sub score 11b and hence, an impact which is applied to the score 11 arranged adjacent to the sub score 11b can be alleviated thus giving rise to an advantageous effect that the cracking of score attributed to a fall or the like canbeprevented. Here, the sub scores 11b may be formed on both sides (upper and lower sides) such that the sub scores 11b sandwich the main score 11 or the sub score 11b may be formed on only one side.

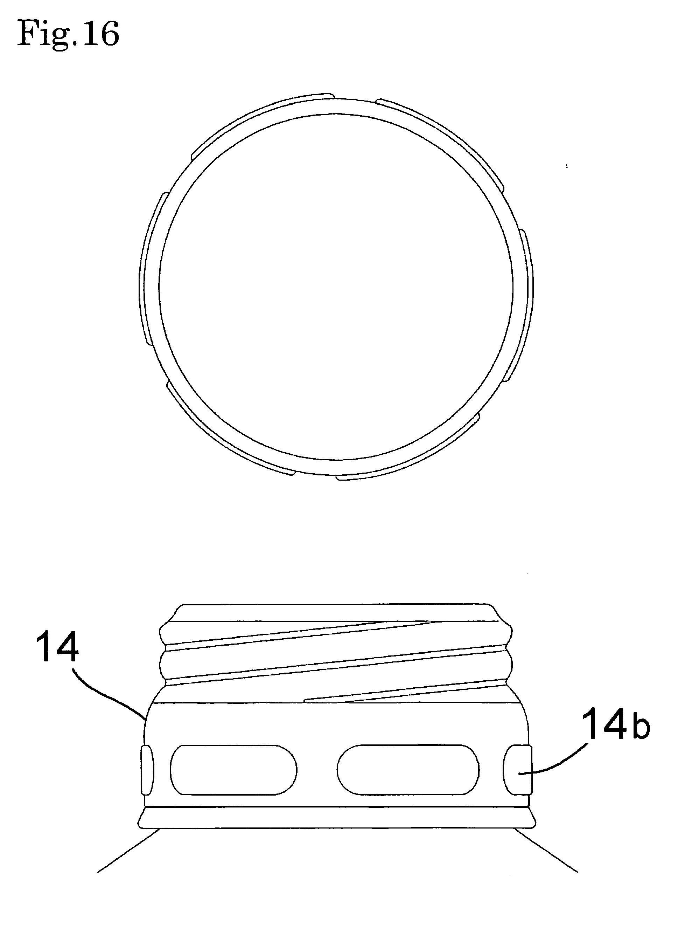

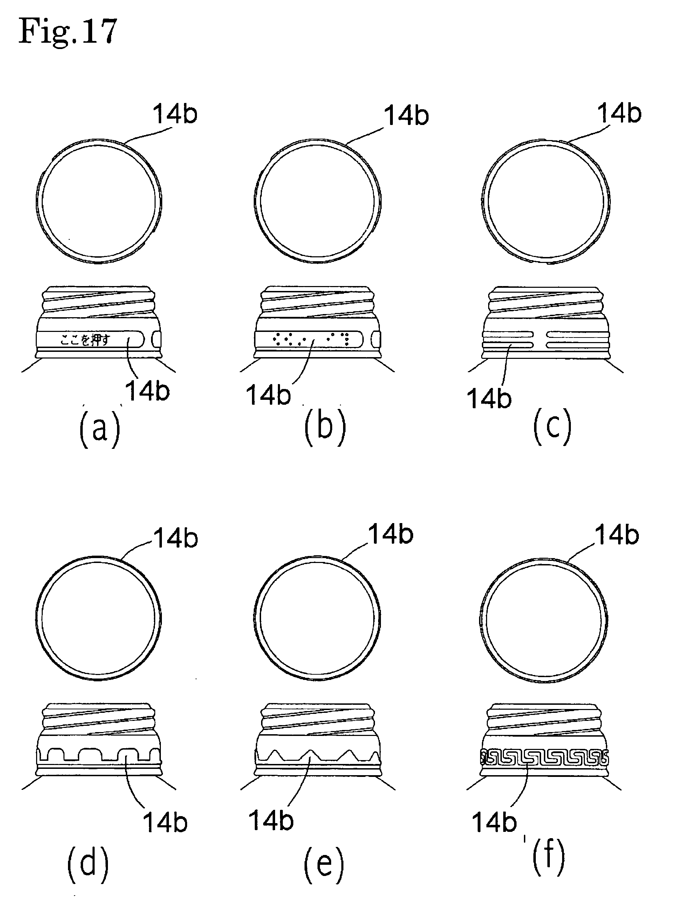

Further, in the opening structure of the present invention, as shown in Fig. 16, embossed convex portions 14b or the like may be formed such that the deflection rigidity of the outer wall becomes non uniform in the circumferential direction. By forming these embossed convex portions 14b, in the deformation by pushing of the deflection deformation portion in the direction from the outside to the inside, the deflection rigidity is concentrated on relatively weak portions on the circumference and hence, such portions or the vicinity of such portions become starting points of cracks of the main score whereby the opening of the container is further facilitated.
A shape of the embossed convex portions 14b is not limited to the shape shown in Fig. 16 and various shapes illustrated in Fig. 17 (a) to Fig. 17 (f), for example, may be applicable as the shape of the embossed convex portions 14b. By forming the embossed convex portion 14b, the embossed convex portions 14b also function as marks which indicate optimum portions for pushing at the time of breaking the main score by pushing. Further, the embossed convex portions 14b prevent slipping at the time of opening the cap portion A and the pouring portion B after breaking the main score and at the time of resealing after opening the container, a finger catching operation can be enhanced.

Further, with respect to the opening structure of the present invention, although not shown in the drawing, an unopened guarantee material may be provided to the deflection deformation portion or in the vicinity of the deflection deformation portion or to the main score or in the vicinity of the main score. The unopened guarantee material is configured such that a visual change is irreversibly generated on the unopened guarantee material when a fixed stress (pressure) or strain or more is generated in the unopened guarantee material and, a material which is generally referred to as a pressure sensitive material, stress paint (strain paint) or like may be exemplified.
As the pressure sensitive material, for example, a non-carbon copying paper is popularly used, wherein microcapsules in which a coloring agent is filled are broken due to pressure and the coloring agent in the microcapsules is absorbed by a developer thus discoloring the pressure sensitive agent by a chemical reaction. By adjusting the coloring agent such that the pressure sensitive material is discolored with a pushing force which can open the container, it is possible to visually confirm the presence or the non-presence of the opening of the container (tamper evident property).
On the other hand, when the stress paint is used, a crack is generated on the coated film with a fixed stress or more, whereby by adjusting the stress such that a crack is generated with a pushing force which can open the container, it is also possible to visually confirm the presence or the non-presence of the opening of the container (tamper evident property) in the same manner.

### (Container)

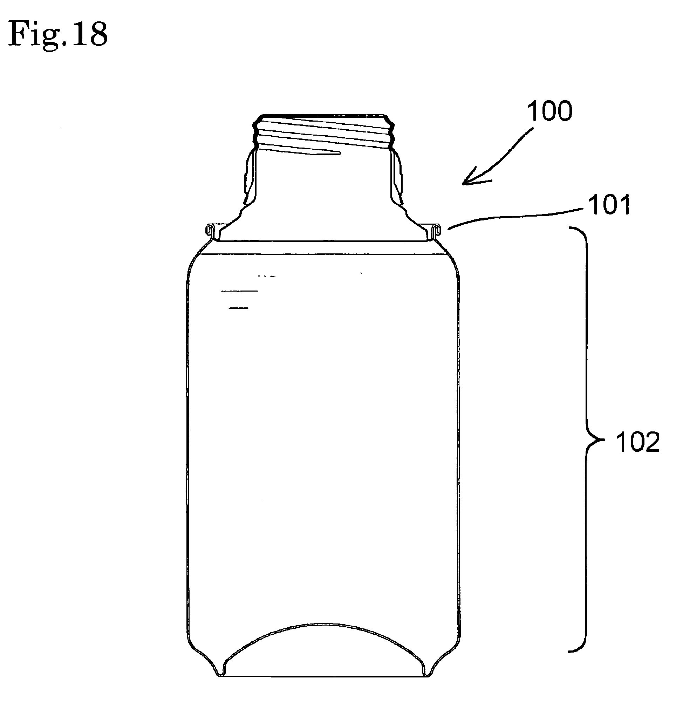

Fig. 18 is a cross-sectional view of an essential part of a container which includes the opening structure of the container of the present invention. The container 100 of the present invention includes the either one of the above-mentioned opening structures of the container. In the container 100, the opening structure of the container is seamed and fixed to an upper end portion of a container drum portion 102 by a curled portion 101 which is formed on a lower peripheral portion. Here, a fixing means is not limited to the above-mentioned seaming and a joining method such as adhesion, melting, welding or the like can be considered.

Although the container drum portion 102 is mainly formed using a metal material such as aluminum alloy, steel or the like as a main material, it is also possible to use a plastic material such as polyethylene, polyethylene terephthalate.
Further, various forming methods such as deep drawing, ironing, extrusion molding, injection molding and various materials can be selectively used corresponding to an application, a manufacturing cost and the like. For example, when the container drum portion 102 is formed of the metal material, by selecting the metal material which exhibits the excellent formability, it is possible to form the container drum portion 102 by applying the deep drawing, the ironing or the like thus forming the container drum portion 102 which exhibits the excellent durability against an impact and the excellent leak resistance. On the other hand, when the whole container drum portion 102 is formed of the plastic material, a known technique such as injection molding, extrusion molding, sheet forming, blow forming or the like can be applied whereby a manufacturing cost at the time of manufacturing the opening structure of the container on a mass production basis can be lowered.

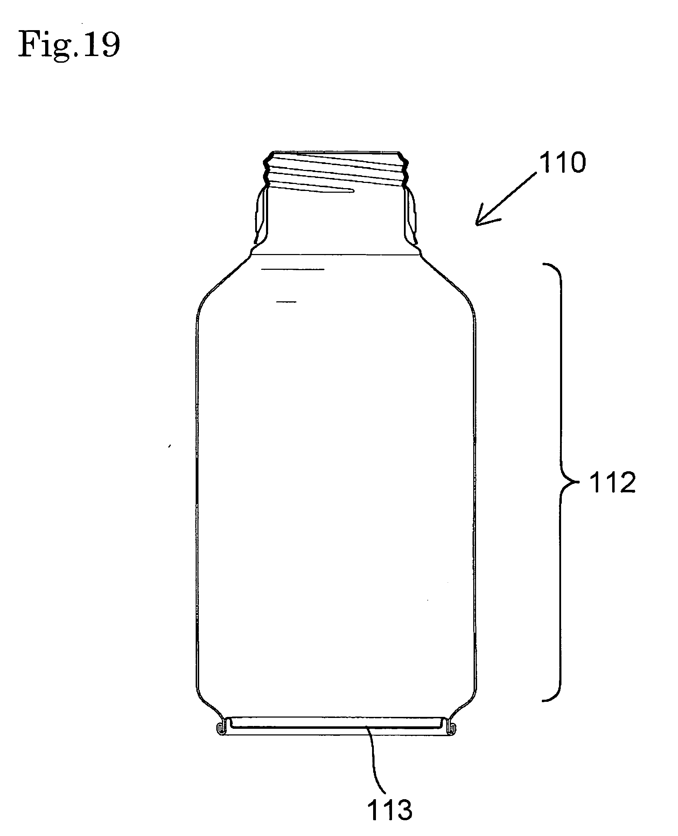

The container 110 shown in Fig. 19 is another example of the container provided with the opening structure of the container of the present invention, wherein the opening structure and a container drum portion 112 are integrally formed and a bottom lid 113 is seamed and fixed to a lower end portion of the above-mentioned container drum portion 112.

### (Manufacturing method)

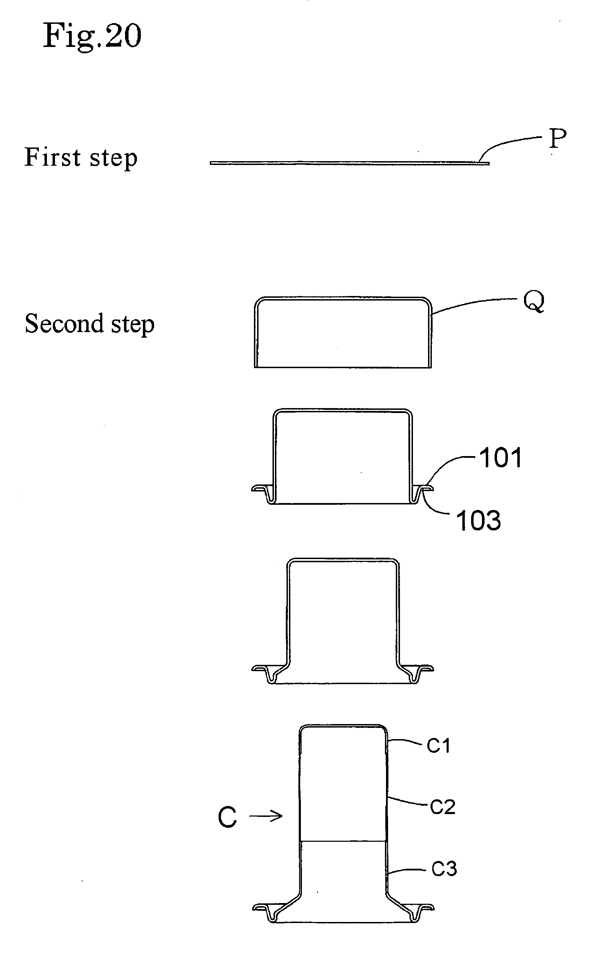

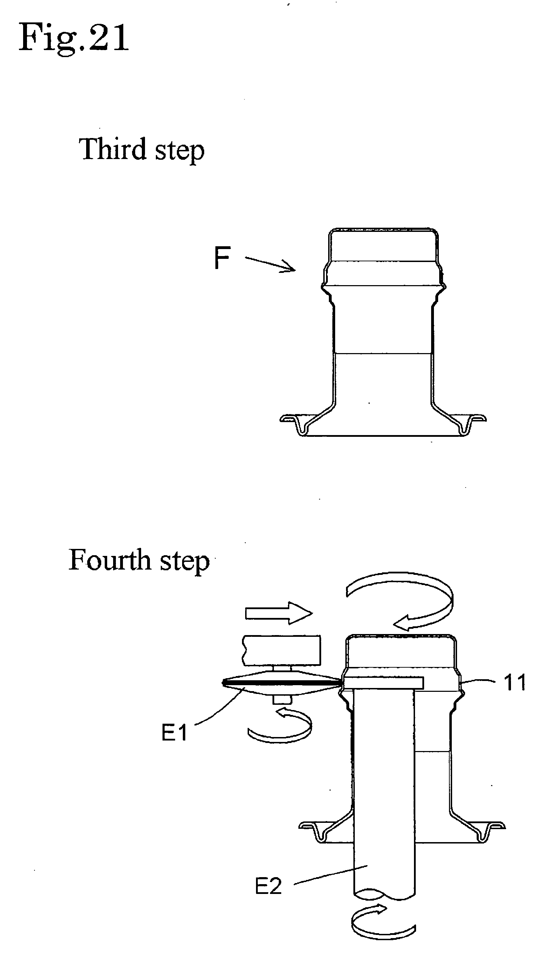

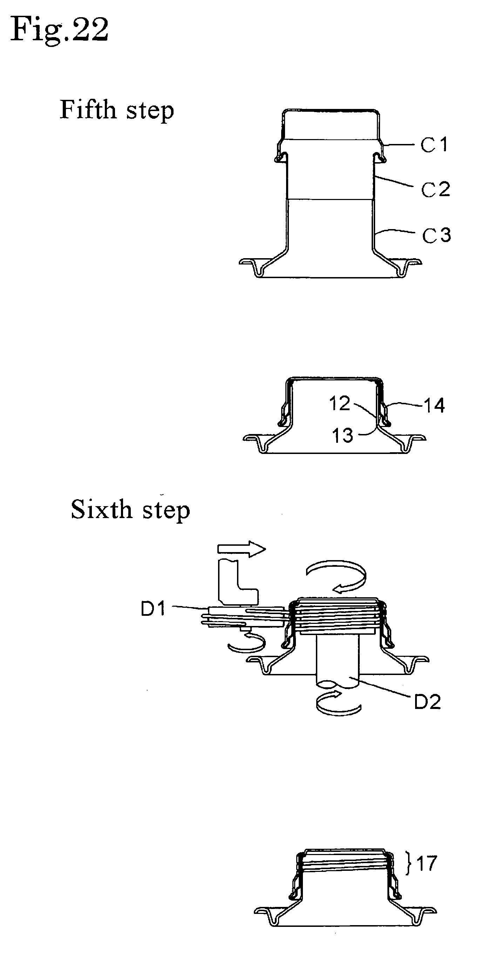

One embodiment of the manufacturing method of the opening structure of the container of the present invention is described hereinafter. The manufacturing method of the above-mentioned opening structure of the container which is fixed to the upper end portion of the container drum portion 102 in the container 100 shown in Fig. 18 is explained in conjunction with Fig. 20 to Fig. 23.

### (First step)

First of all, a cylindrical cup Q is formed by drawing a metal plate P such as an aluminum plate.

### (Second step)

The cylindrical cup Q has a diameter thereof narrowed several times by redrawing when necessary until a diameter of a cylindrical portion becomes a diameter of the pouring portion thus forming a cylindrical portion C. At this point of time, the curling portion 101 which is seamed and fixed to the upper end portion of the container drum portion of the container is formed on an outer peripheral portion of the cylindrical cup Q or the cylindrical portion C and, at the same time, although not shown in the drawing, in a suitable step after this step, a sealing agent 103 is applied to the inside of the curling portion 101 to ensure the sealing property of the seaming.
Further, in a final stage of redrawing to form the cylindrical cup Q into the cylindrical portion C, ironing is combined to the redrawing to make the wall thickness distribution different in the longitudinal direction (height direction) of the cylindrical portion C. That is, dividing the cylindrical portion C into the outer wall expecting portion C1, the intermediate wall expecting portion C2 and the inner wall expecting portion C3, a wall thickness of the intermediate wall expecting portion C2 is set smaller than the wall thicknesses of other portions. By making the wall thickness of the intermediate wall expecting portion C2 smaller than the wall thicknesses of other portions, it is possible to favorably perform a folding step performed later.

### (Third step)

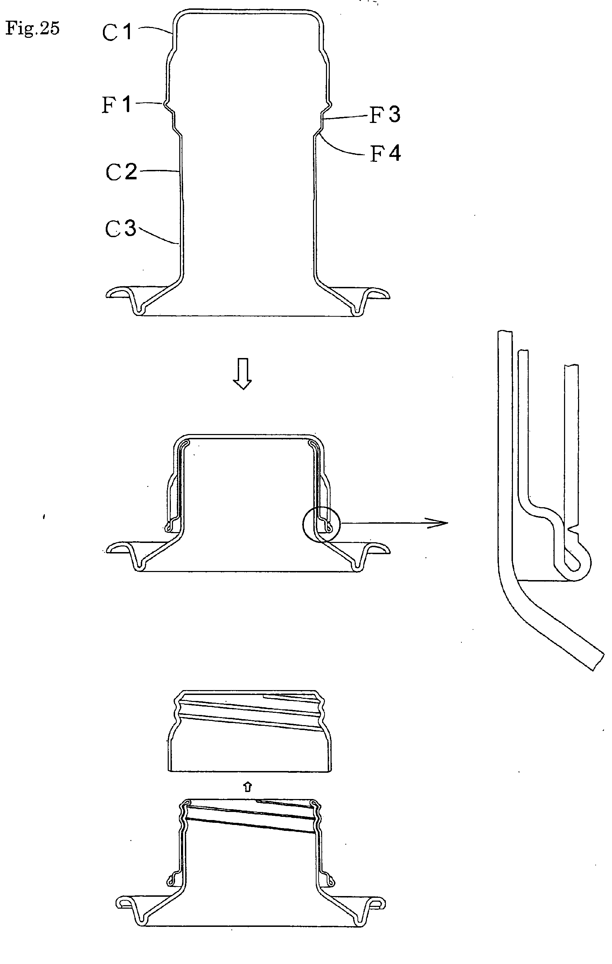

Next, a diameter of the cylindrical portion C is enlarged from the inside to the outside with a means which uses an inner pressure such as bulging forming thus forming an enlarged-diameter portion F. For example, a split mold V (an outer mold) of the cylindrical portion C is arranged, a resilient body U made of urethane (see Fig. 23) is inserted into the inside of the cylindrical portion C, and a pressure is applied to the resilient body U by a pressurizing tool R so as to deform the resilient body U. A formed enlarged portion F becomes the outer wall 14 after being molded as the opening structure. Here, by allowing an inner surface shape of the split mold V to conform to a shape which corresponds to a shape of an embossed convex portion 14b, it is possible to form the embossed convex portion 14b on the outer wall in the forming process (see Fig. 17).

### (Fourth step)

The easy-to-break portion 11 is formed in the enlarged-diameter portion F of the cylindrical portion C using a blade roll E1 and a rotary mandrel E2.

### (Fifth step)

Next, the cylindrical portion C is pressurized in the height direction such that the intermediate wall expecting portion C2 which is formed at a center portion in the height direction of the cylindrical portion C is formed into the intermediate wall 13, the outer wall expecting portion C1 is arranged at the outermost side and is folded back from above to form the outer wall 14 thus forming a projecting portion consistingof cylindrical triplicatewalls consisting of an inner wall 12, an intermediate wall 13 and an outer wall 14.

### (Sixth step)

Next, an outer thread forming roll D1 and an inner thread forming roll D2 are brought into pressure contact with the outside and the inside of the projecting portion and the projecting portion is rotated to form the thread engaging portion 17 thus completing the opening structure of the embodiment 1 shown in Fig. 1. Here, in the above-mentioned third step, at the time of forming the enlarged-diameter portion F by enlarging the diameter of the cylindrical portion C from the inside to the outside, when the bulged annular portion F1 is formed in the vicinity of the boundary between the outer wall expecting portion C1 and the intermediate wall expecting portion C2 and the connecting portion F2 having a diameter larger than the diameter of the intermediate wall expecting portion C2 is formed below the bulged annular portion F1, in the folding-back forming in the fifth step, it is possible to easily form the triplicate wall.
A shape of the above-mentioned connecting portion F2 is, as shown in Fig. 24, a shape which imparts an angular change to the connecting portion F2 such that the bulged annular portion F1 is directly connected to the intermediate wall expecting portion C2 of the cylindrical portion C. Further, as shown in Fig. 25, a cylindrical wall portion F3 having a diameter larger than a diameter of the intermediate wall expecting portion C2 and a stepped portion F4 are provided to form a connecting portion F2, and the connecting portion F2 may be connected to the intermediate wall expecting portion C2 of the cylindrical portion C. By forming the connecting portion F2 or the cylindrical wall portion F3 and the stepped portion F4 shown in Fig. 24 and Fig. 25, it is possible to provide the opening structure in which the easy-to-breakportion 11 formed in the outer wall 14 is brought into close contact with the intermediate wall 13 after the fold-back operation, wherein after the cap is opened, there exists no gap between an edge of the easy-to-break portion 11 and the intermediate wall 13 and hence, a user is hardly injured by the edge thus enhancing the safety of the opening structure.
Further, when the opening structure is formed of the plastic material or the like, the cylindrical portion C which forms the enlarged-diameter portion F in the above-mentioned third step is formed by the injection molding or the like, and after the formation of the easy-to-break portion 11 in the fourth step, at a softening temperature which allows the molding, the folding-back operation in the fifth step and the formation of the thread engaging portion are performed thus providing the opening structure of the container.

### (Manufacturing device)

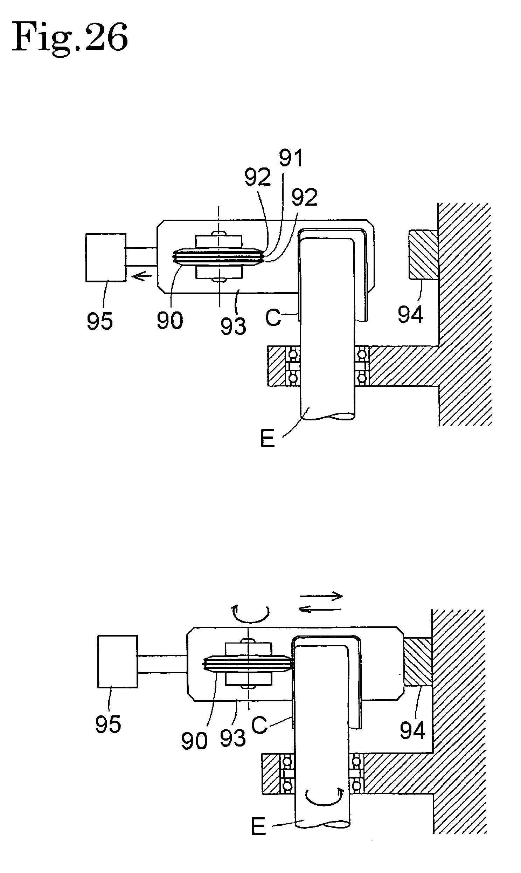

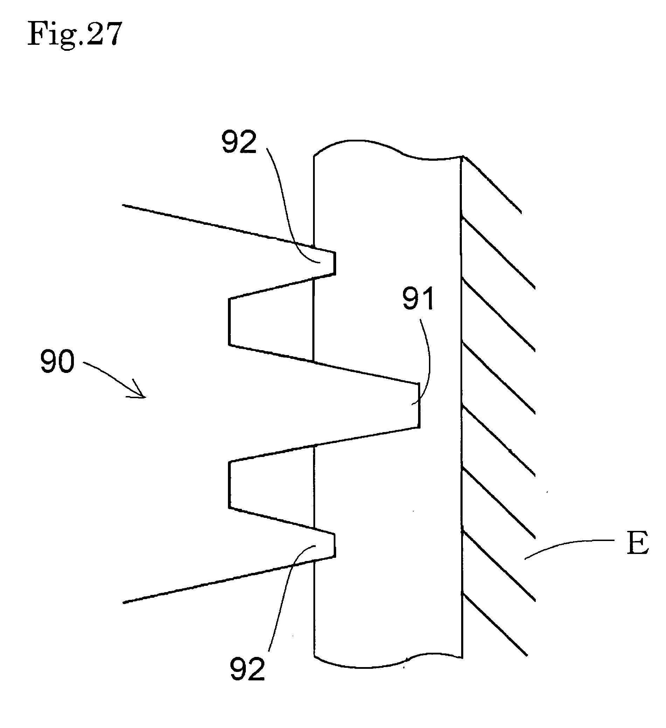

Fig. 26 is a schematic side view of the manufacturing device of the opening structure of the container of the present invention, and Fig. 27 is a score forming means in the above-mentioned manufacturing device. As shown in Fig. 26, the manufacturing device is constituted of a rotary-roll-shaped score forming means 90 which includes a main score forming blade 91 and a sub score forming blade 92, a slide-plate-like holding and moving means 93 which holds and moves the score forming means 90, a block-like restricting means 94 which restricts the movement of the slide-plate-like holding and moving means 93, and a mandrel E which is inserted into the cap portion C, wherein the slide-plate-like holding and moving means 93 is moved by a drive means 95 which is shown in a simplified form.
Here, although not shown in the drawing, it is also possible to provide a holding means which holds a positional relationship between the cap portion and the mandrel E.
The rotary-roll-shaped score forming means 90 is rotatably mounted on the holding and moving means 93, while the holding and moving means 93 is movable in the direction of the restricting member 94.
The main score and the sub score are formed in the opening member C as follows. First of all, the rotary mandrel E is inserted into the cylindrical cap portion C and is brought into contact with the cap portion C from the inside. Thereafter, the holding and moving means 93 is moved toward the restricting means 94 from a state shown in Fig. 26(a) to a state shown in Fig. 26 (b) so as to bring the score forming means 90 into pressure contact with the opening member C and, at the same time, to rotate the score forming means 90 relative to the opening member C. Next, the formation of the circumferential main score 11 is started with the main score forming blade 91 of the score forming means 90 and, finally, the before the formation of the main score 11 is finished, the formation of the circumferential sub score 11b is started with the above-mentioned sub score forming blade 92 of the score forming means 90.

Then, as shown in Fig. 26 (b), when the holding and moving means 93 is brought into contact with the restricting means 94, the pressure contact of the score forming means 90 mounted on the above-mentioned holding and moving means 93 with the opening member C is interrupted and hence, the formation of the main score 11 and the sub score 11b by the main score forming blade 91 and the sub score forming blade 92 of the score forming means 90 is finished as shown in Fig. 27.
Here, the number of the sub score forming blades 92 in the score forming means 90 may be set such that at least one sub score forming blade 92 is formed either above or below the main score forming blade 91 or one, two or more sub score forming blade 92 are formed above and below the main score forming blade 91. Further, the number of sub score forming blades 92 may differ between above and below the main score forming blade 91.

Further, although the main score forming blade 91 and the sub score forming blade 92 of the score forming means 90 may be formed in a straight blade shape, a blade-like roll which forms the main score forming blade 91 having a large diameter and the sub score forming blade 92 having a small diameter on one roll, or a blade-shaped roll which is formed by assembling the sub score forming blade 92 having a small diameter to the main score forming blade 91 having a large diameter in a coaxially overlapped manner is preferable in view of the formability, the productivity, the maintenance and the like of the score.

Further, although the slide-plate-like holding and moving means 93 is illustrated as the holding and moving means which holds and moves the score forming means 90, it is possible to apply a tiltable arm as another example as an example. Further, although the block-like restricting means 94 is illustrated as the restricting means, it is possible to apply a link mechanism, a cam mechanism, an electromagnetic brake, a combined mechanism of these mechanisms or the like can be applied as another example.

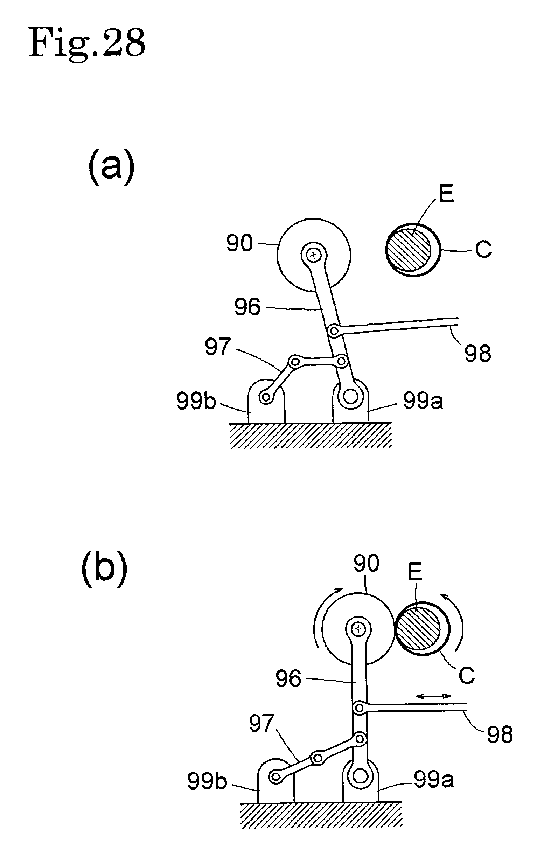

Fig. 28 is a schematic side view of the manufacturing device showing another embodiment. As shown in Fig. 28, the manufacturing device of this embodiment is constituted of a rotary-roll-shaped score forming means 90 which includes a main score formingblade 91 anda sub score formingblade 92 , anarm-like holding and moving means 96 which holds the score forming means 90, a link-like restrictingmeans 97 which restricts the movement (tilting) of the holding and moving means 96, and a mandrel E which is inserted into the cap portion C. Although the holding and moving means 96 is shown in a simplified form, the holding and moving means 96 is moved (tilted) by the arm-shaped drive means 98 which is connected to a center portion of the holding and moving means 96.
Further, the holding and moving means 96 has a proximal end portion thereof fixed to a holding member 99a, while the restricting member 97 has a proximal end portion thereof fixed to the holding member 99b and a distal end thereof fixed to the arm-shaped holding member 96.
The main score and the sub score are formed in the cap portion member C as follows. First of all, the rotary mandrel E is inserted into the cylindrical cap portion C and is brought into contact with the cap portion C from the inside. Thereafter, the holding and moving means 96 and the score forming means 90 are moved (tilted) by the drive means 98 in the right direction in the drawing from a state shown in Fig. 28 (a) to a state shown in Fig. 28(b) so as to bring the score forming means 90 into pressure contact with a side wall of the cap portion C and, at the same time, to rotate the score forming means 90 relative to the cap portion C.
Then, as shown in Fig. 28(b), at point of time that the restricting means 97 assumes a linear posture, the pressure contact of the score forming means 90 mounted on the holding and moving means 96 with the cap portion C is interrupted and hence, as shown in Fig. 27, the formation of the main score 11 and the sub score 11b by the main score forming blade 91 and the sub score forming blade 92 of the score forming means 90 is finished.

The opening structure of the present invention is the cap structure which is applicable to a sealed container such as a juice can, a beer can, a carbonated drink can, a coffer drink can, a tea drink can, an edible oil can, a seasoning can or the like, wherein the metal material, the metal material such as aluminum alloy or steel which has an inner surface or an outer surface covered with a resin layer or the like, or the plastic material is preferably applied to the opening structure as the material thereof, and a profile such as a columnar shape, a prism-like shape or the like is preferably applied as a shape of the container.

## Claims

1. An opening structure of the container which continuously and integrally forms a cap portion and a pouring portion, wherein due to a radial deformation of an easy-to-break portion which is present in a boundary between the cap portion and the pouring portion, the easy-to-break portion is broken and hence, the cap portion and the pouring portion are separated thus opening the container.

2. The opening structure of a container according to claim 1, wherein a deflection deformation portion is provided in the vicinity of the easy-to-break portion, the deflection deformation portion is deformed by pressing in the inside direction from the outside thus generating the radial deformation of the easy-to-break portion.

3. The opening structure of a container according to claim 1 or 2, wherein the cap portion and the pouring portion are continuously and integrally formed of an inner wall, an intermediate wall which is folded back downwardly from an upper end portion of the inner wall, and an outer wall which is folded back upwardly from a lower end portion of the intermediate wall, and the easy-to-break portion is formed on the outer wall.

4. The opening structure of a container according to claim 3, wherein the deflection deformation portion is provided in a gap defined between the outer wall and the intermediate wall and/or in a gap defined between the intermediate wall and the inner wall.

5. The opening structure of a container according to any one of claims 1 to 4, wherein the capportion includes a cylindrical cover portion which is contiguously integrally formed with the easy-to-breakportionandadisc-like ceilingplateportionwhich covers an opening portion of the pouring portion, and thread portions are formed on the cylindrical cover portion and the pouring portion which is contiguously formed with the cover portion.

6. The opening structure of a container according to claim 5, wherein along with the rotation of the cap portion in the cap opening direction from a cap-sealed state, a gap generated between the thread grooves of the pouring portion and the thread crests of the cap portion is gradually enlarged.

7. The opening structure of a container according to claim 6, wherein a width of the thread grooves of the pouring portion and a width of the thread grooves of the cap portion are gradually decreased downwardly.

8. The opening structure of a container according to claim 6, wherein a depth of the thread grooves of the pouring portion and a height of the thread crests of the cap portion are gradually decreased downwardly.

9. The opening structure of a container according to claim 6, wherein a width of the thread grooves of the pouring portion and a width of the thread crests of the cap portion are gradually decreased downwardly, and a depth of the thread grooves of the pouring portion and a height of the thread crests of the cap portion are gradually decreased downwardly.

10. The opening structure of a container according to any one of claims 1 to 4, wherein the cap portion includes a cylindrical cover portion which is contiguously integrally formed with the easy-to-break portion and a disc-like ceiling plate portion which covers an opening portion of the pouring portion, and an undercut portion is formed in the cylindrical cover portion.

11. The opening structure of a container according to any one of claims 1 to 10, wherein a sealing material is arranged between an upper portion of an inner surface of the cap portion and the pouring portion.

12. The opening structure of a container according to any one of claims 1 to 11, wherein sub scores are formed adjacent to the easy-to-break portion.

13. The opening structure of a container according to any one of claims 1 to 12, wherein the deflection rigidity of the deflection deformation portion is set non-uniform in the circumferential direction.

14. The opening structure of a container according to claim 13 , wherein the deflection deformation portion is embossed.

15. The opening structure of a container according to any one of claims 1 to 14, wherein an unopened guarantee material is provided to or in the vicinity of the deflection deformation portion or to or in the vicinity of the easy-to-break portion.

16. A container being **characterized by** including the opening structure of a container described in any one of claims 1 to 15.

17. A manufacturing method of an opening structure of a container, an enlarged-diameter portion is formed by enlarging a diameter of a cylindrical portion from the inside to the outside thereof, an easy-to-break portion is formed on the enlarged-diameter portion, the cylindrical portion is pressurized in the height direction such that an intermediate wall expecting portion which is formed on a center portion of the cylindrical portion in the height direction is formed into an intermediate wall, an outer wall expecting portion is folded back from above such that the outer wall expecting portion is arranged on an outermost side and forms an outer wall thus forming a projecting portion which is formed of cylindrical triplicate walls consisting of an inner wall, an intermediate wall and the outer wall, and a deflection deformation portion is formed between the outer wall and the intermediate wall and/or between the intermediate wall and the inner wall, and engaging portions are formed on the projecting portion.

18. The manufacturing method of an opening structure of a container according to claim 17, wherein in forming the enlarged-diameter portion by enlarging the cylindrical portion from the inside to the outside, a bulged annular portion is formed in the vicinity of a boundary between the outer wall expecting portion and the intermediate wall expecting portion, and a connecting portion having a diameter larger than a diameter of the intermediate wall expecting portion is provided below the bulged annular portion.

19. The manufacturing method of an opening structure of a container according to claim 17 or 18, wherein sub scores are formed adjacent to the easy-to-break portion.
